# EUROPEAN PATENT APPLICATION

(11) **EP 4 838 590 A1**
(43) Date of publication of application: **11.11.2026**
(21) Application number: 26173290.3
(22) Date of filing: 20.04.2026
(51) Int. Cl.: H01M 8/0202, H01M 8/2465, H01R 4/64

(54) **CONNECTION ASSEMBLIES, POWER SYSTEMS, AND ENGINE SYSTEMS**

(30) Priority: 23.04.2025 CN 202510523234
(71) Applicant: Robert Bosch GmbH, 70442 Stuttgart (DE)
(72) Inventor: LI, Sheng (engl. Name: Stephanie), Suzhou, Jiangsu, 215021 (CN)

(57) **Abstract**

The present application relates to a connection assembly, a power system, and an engine system. The connection assembly is used to mechanically fix and conductively connect a fuel cell stack and a power transfer unit together. The connection assembly comprises: a conductive core; an insulating element disposed around the conductive core; and a shielding element disposed around the insulating element, wherein the two ends of the connection assembly are capable of being inserted into corresponding insulating post assemblies of the fuel cell stack and the power transfer unit, respectively, to achieve mechanical fixation and conductive connection between the fuel cell stack and the power transfer unit. This simplifies the mechanical fixation and conductive connection between the fuel cell stack and the power transfer unit.

## Description

### Technical Field

The present application relates to the technical field of fuel cells, and in particular to a connection assembly for mechanically fixing and conductively connecting a fuel cell stack and a power transfer unit together, a power system having the connection assembly, and an engine system having the power system.

### Background

As the global focus on climate change and environmental protection is growing, reducing greenhouse gas emissions and air pollution has become an important goal for all countries. Traditional fuel engines produce large amounts of pollutants such as carbon dioxide, nitrogen oxides, and particulate matter during operation, causing serious harm to the environment. Fuel cell engines use clean energy sources such as hydrogen as fuel. Their working principle is to directly convert the chemical energy of hydrogen and oxygen into electrical energy. The only emission is water, achieving true zero emissions. Therefore, fuel cell engines, as clean and efficient energy conversion devices, have received widespread attention and are considered one of the important technological means for future energy transition and achieving sustainable development.

A fuel cell engine system is composed of a plurality of subsystems, including, for example, a fuel cell stack, a power transfer unit (PTU), an air compressor, and a hydrogen circulation pump. Here, the fuel cell stack is a core component of the fuel cell engine system and the site where electrochemical reactions occur. The power transfer unit is used to receive electrical energy from the fuel cell stack and convert the received electrical energy to provide it to, for example, a drive motor or other auxiliary device. Therefore, it is necessary to make a conductive connection between the fuel cell stack and the power transfer unit.

In the prior art, the fuel cell stack and the power transfer unit are typically mechanically fixed using bolts, thereby achieving a conductive connection. However, this requires a stack cover to be installed on the upper surface of the power transfer unit. The stack cover needs to be opened when connecting or disconnecting and closed after connecting or disconnecting.

In order to prevent moisture and/or impurities from entering the power transfer unit, a seal is required for the stack cover. However, frequent opening and closing of the stack cover can easily result in seal failure. In addition to the stack cover, the upper surface of the power transfer unit is usually also provided with a fuse cover for servicing the fuse. For operators, it is easy to confuse the two covers, leading to the mistaken opening of the wrong cover, which further increases the probability of seal failure.

### Summary of the Invention

The purpose of this application is to solve or at least alleviate at least a portion of the problems present in the prior art.

A first aspect of the present application provides a connection assembly for mechanically fixing and conductively connecting a fuel cell stack and a power transfer unit together,
wherein
the connection assembly comprises:
a conductive core;
an insulating element disposed around the conductive core; and
a shielding element disposed around the insulating element,
wherein the two ends of the connection assembly are capable of being inserted into corresponding insulating post assemblies of the fuel cell stack and the power transfer unit, respectively, to achieve mechanical fixation and conductive connection between the fuel cell stack and the power transfer unit.

By means of the connection assembly, for example, one end of the connection assembly can be first inserted into the insulating post assembly disposed on the upper surface of the fuel cell stack, and the insulating post assembly disposed on the lower surface of the power transfer unit can be inserted from above into the other end of the connection assembly, thereby achieving both mechanical fixation of the power transfer unit to the fuel cell stack and conductive connection between the fuel cell stack and the power transfer unit. This eliminates the need for an additional stack cover on the upper surface of the power transfer unit and avoids the risk of moisture and/or impurities entering the power transfer unit as a result of seal failure. This also avoids the risk of confusion with the fuse cover for servicing the fuse.

A second aspect of the present application provides a power system comprising a fuel cell stack and a power transfer unit,
wherein
the power system further comprises the connection assembly described above, the connection assembly mechanically fixing the fuel cell stack and the power transfer unit together and conductively connecting them.

A third aspect of the present application provides an engine system comprising a drive motor,
wherein
the engine system further comprises the aforementioned power system, the power system being used for driving the drive motor.

### Brief Description of the Drawings

The embodiments of the present application will be described in further detail below in conjunction with the accompanying drawings, but it will be appreciated by those skilled in the art that these drawings are for the purpose of explaining the embodiments only and should not be construed as limiting the scope of the present application. The drawings show:
FIG. 1 is a simplified schematic diagram of a portion of a power system according to the prior art;
FIG. 2 is a simplified schematic diagram of a portion of a power system according to one embodiment of the present application;
FIG. 3 is a perspective view of a connection assembly according to one embodiment of the present application;
FIG. 4 is a cross-sectional view of a connection assembly according to one embodiment of the present application;
FIG. 5 is a perspective view of an insulating post assembly according to one embodiment of the present application;
FIG. 6 is a cross-sectional view of an insulating post assembly according to one embodiment of the present application;
FIG. 7 is a simplified schematic diagram of a portion of a power system according to one embodiment of the present application;
FIG. 8 is a cross-sectional view of a portion of a power system according to one embodiment of the present application.

### Detailed Description of the Embodiments

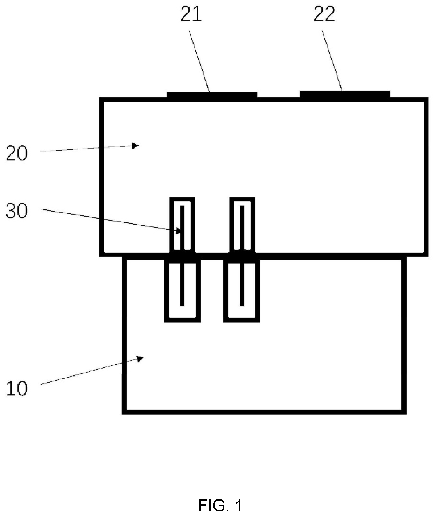

FIG. 1 shows, in a very simplified schematic diagram, a portion of a power system according to the prior art. The fuel cell stack 10 and power transfer unit 20 of the power system are shown only schematically here. As can be seen from FIG. 1, the fuel cell stack 10 is located at the bottom, and the power transfer unit 20 is placed on the upper surface of the fuel cell stack 10 from above. To mechanically fix the power transfer unit 20 to the fuel cell stack 10 and to conductively connect them, bolts 30 are shown schematically. Since the fuel cell stack 10 typically has two terminals, positive and negative, two bolts 30 are used to conductively connect the positive and negative terminals of the fuel cell stack 10 to the positive and negative terminals of the power transfer unit 20, respectively. In order to mechanically fix the power transfer unit 20 to the fuel cell stack 10 and make a conductive connection using the bolts 30, an opening must be provided on the upper surface of the power transfer unit 20 (at the position directly opposite the bolts 30). When it is necessary to mechanically fix the power transfer unit 20 to the fuel cell stack 10 and make a conductive connection or to disassemble it, a tool can be inserted into the opening on the upper surface of the power transfer unit 20 to tighten or loosen the bolts 30. However, this may result in moisture and/or impurities entering the power transfer unit 20 through the opening. To avoid this, a stack cover 21 is typically provided at the opening so that the opening can be closed using the stack cover 21 upon completion of fixed connection or disassembly. To further improve sealing, a seal element is usually provided for the stack cover 21. However, frequent opening and closing of the stack cover 21 can easily result in seal failure. Furthermore, in addition to the stack cover 21, a fuse cover 22 for servicing the fuse is typically provided on the upper surface of the power transfer unit 20. For operators, it is easy to confuse the two covers, leading to the mistaken opening of the wrong cover, which further increases the probability of seal failure. This also increases the risk of electric shock to operators from high voltage.

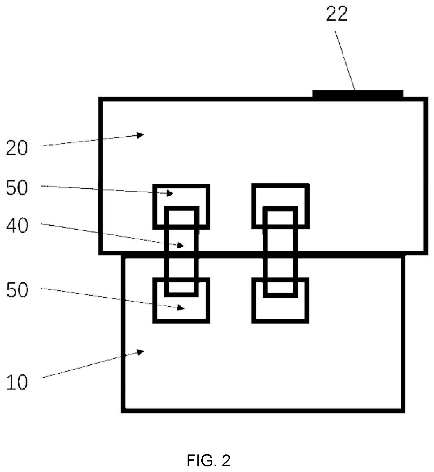

FIG. 2 shows, in a very simplified schematic diagram, a portion of a power system according to one embodiment of the present application. Here, similarly, the fuel cell stack 10 and power transfer unit 20 of the power system are shown only schematically. As can be seen from FIG. 2, the fuel cell stack 10 is similarly located at the bottom, and the power transfer unit 20 is placed on the upper surface of the fuel cell stack 10 from above. Here, in order to mechanically fix the power transfer unit 20 to the fuel cell stack 10 and make a conductive connection, the bolts 30 shown in FIG. 1 are no longer used, but a connection assembly 40 is used instead. To mechanically fix the power transfer unit 20 to the fuel cell stack 10 and make a conductive connection using the connection assembly 40, insulating post assemblies 50 are respectively mounted in the facing surfaces of the fuel cell stack 10 and the power transfer unit 20. By means of the connection assembly 40, for example, one end of the connection assembly 40, here the lower end, can be first inserted into the insulating post assembly 50 disposed on the upper surface of the fuel cell stack 10, and the insulating post assembly 50 disposed on the lower surface of the power transfer unit 20 can be inserted from above into the other end of the connection assembly 40, here the upper end. This achieves both mechanical fixation of the power transfer unit 20 to the fuel cell stack 10 and conductive connection between the fuel cell stack 10 and the power transfer unit 20. This eliminates the need for an additional stack cover 21 on the upper surface of the power transfer unit 20 and avoids moisture and/or impurities entering the power transfer unit 20 as a result of seal failure. Confusion with the fuse cover 22 for servicing the fuse is also avoided. This simultaneously increases the speed at which the fuel cell stack 10 and the power transfer unit 20 are connected and installed.

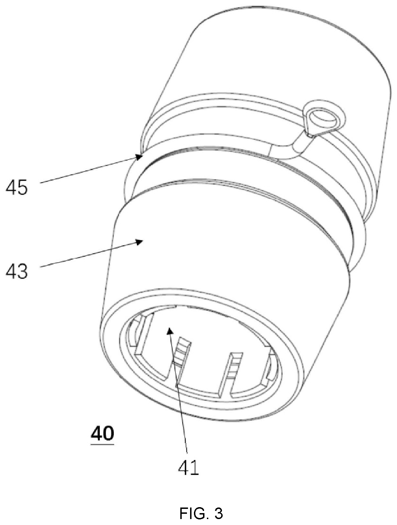

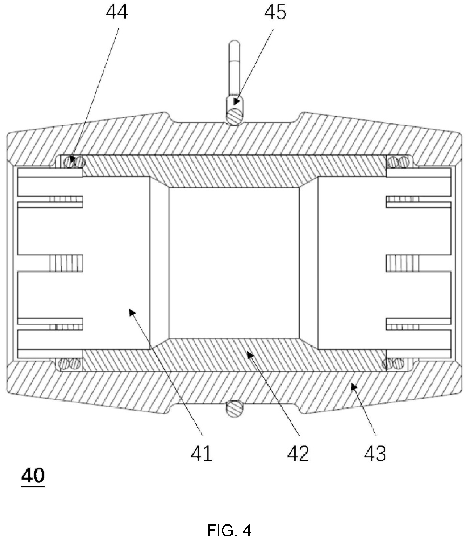

FIG. 3 shows, in a perspective view, a connection assembly 40 according to one embodiment of the present application and FIG. 4 shows, in a cross-sectional view, a connection assembly 40 according to one embodiment of the present application. The connection assembly 40 is used to mechanically fix and conductively connect the fuel cell stack 10 with the power transfer unit 20. As can be clearly seen from FIGS. 3 and 4, the connection assembly 40 comprises a conductive core 41, an insulating element 42 disposed around the conductive core 41, and a shielding element 43 disposed around the insulating element 42.

As can be clearly seen from FIGS. 3 and 4, in particular FIG. 4, the conductive core 41 is constructed in a cylindrical shape and comprises a middle section and contact sections located at both ends of the middle section, wherein the middle section of the conductive core 41 has a first outer diameter, the contact sections of the conductive core 41 have a second outer diameter, the first outer diameter is smaller than the second outer diameter, and the portions of the contact sections extending axially beyond the insulating element 42 are constructed in a claw shape. Such a claw-shaped structure is advantageous because it can achieve a certain degree of elasticity in the radial direction. Thus, when the conductive post 51 of the insulating post assembly 50 is inserted into the contact section of the conductive core 41, the claw-shaped portion of the contact section can be spread open in the radial direction, and at the same time, due to the elasticity of the claw-shaped portion, a certain contact force can be applied to the conductive post 51. Here, the conductive core 41 may be made of a metallic material with good electrical conductivity, particularly copper. The number of contact claws in the claw-shaped portions of the contact sections of the conductive core 41 can be selected as needed and is not limited to the number shown in the figures.

To further ensure the contact force between the contact section of the conductive core 41 and the conductive post 51 of the insulating post assembly 50, a clamping element 44 is provided on the claw-shaped portion of the contact section of the conductive core 41, which is used to apply a predetermined contact force to the conductive post 51 and the contact section when the conductive post 51 of the corresponding insulating post assembly 50 of the fuel cell stack 10 and the power transfer unit 20 is inserted into the contact section. Typically, the insertion force for inserting the conductive post 51 into the contact section and/or the pull-out force for pulling the conductive post 51 out of the contact section needs to be controlled to between 500 N and 800 N to ensure sufficient contact force between the contact section of the conductive core 41 and the conductive post 51 of the insulating post assembly 50. As can also be clearly seen from FIG. 4, the clamping element 44 is disposed within the annular space defined by the conductive core 41, the insulating element 42, and the shielding element 43, such that the clamping element 44 is positioned axially by the insulating element 42 and the shielding element 43 and radially by the conductive core 41 and the shielding element 43. In the embodiment shown in FIG. 4, the clamping element 44 is made of a clamping spring. However, the clamping element 4 is not limited to the clamping spring shown in FIG. 4, but may be made of any other suitable clamping element, as long as it can apply sufficient clamping force to the claw-shaped portion of the contact section of the conductive core 41.

As can also be clearly seen from FIG. 4, the insulating element 42 comprises a middle section and end sections located at both ends of the middle section of the insulating element 42, the middle section of the insulating element 42 has a first inner diameter corresponding to a first outer diameter of the middle section of the conductive core 41, and the end sections of the insulating element 42 have a second inner diameter corresponding to a second outer diameter of the contact sections of the conductive core 41. As such, in the assembled state, the protruding middle section of the insulating element 42 is capable of being embedded in the recessed middle section of the conductive core 41, thereby preventing movement of the insulating element 42 in the axial direction. Here, the insulating element 42 may be made of, for example, rubber. However, the insulating element 42 may also be made of any other suitable insulating material and is not limited to rubber. Here, the insulating element 42 not only can provide insulation, but can further provide support, so that the fuel cell stack 10 and the power transfer unit 20 can be not only conductively connected through the connection assembly 40, but also reliably mechanically fixed together.

As can further be clearly seen from FIG. 4, the free end of the shielding element 43 extending axially beyond the insulating element 42 has an inner diameter smaller than the outer diameter of the insulating element 42. Therefore, the inner surface of the free end of the shielding element 43 protrudes radially inward. The protruding part can, on the one hand, position the clamping element 44 in the axial direction to prevent the clamping element 44 from falling off the contact section of the conductive core 41 in the axial direction. On the other hand, it can apply a radial force to the claw-shaped portion when the claw-shaped portion of the contact section of the conductive core 41 is radially spread outward, thereby helping to apply sufficient contact force between the contact section of the conductive core 41 and the conductive post 51 of the insulating post assembly 50. Further, the shielding element 43 has a middle section and plug-in sections located at both ends of the middle section of the shielding element 43, the plug-in sections of the shielding element 43 being constructed in a conical shape with an outer diameter that gradually decreases toward a free end. Such a configuration makes it easier for the connection assembly 40 to be inserted into the corresponding insulating post assembly 50 of the fuel cell stack 10 and the power transfer unit 20. Further, as can also be clearly seen from FIGS. 3 and 4, the outer surface of the middle section of the shielding element 43 is configured to be recessed relative to the outer surfaces of the plug-in sections of the shielding element 43, thereby allowing a grounding element 45 to be provided on the recessed outer surface of the middle section of the shielding element 43. In the embodiments shown in FIGS. 3 and 4, the grounding element 45 is composed of a metal spring surrounding the middle section of the shielding element 43. However, the grounding element 45 is not limited to the metal spring shown in FIGS. 3 and 4, but may be constructed in any other form as long as it is in contact with the outer surface of the shielding element 43 and achieves grounding.

Here, the shielding element 43 may be made of rubber, and in order to achieve grounding through the grounding element 45, the outer surface of the shielding element 43 is provided with a semiconductor material layer. The resistivity of the semiconductor material layer is preferably between 500 Ω/cm and 10000 Ω/cm. The shielding element 43 has multiple functions here. In addition to achieving electromagnetic compatibility (EMC) through grounding via the grounding element 45, it also serves as a supplement to the insulating element 42, further enhancing insulation and support and thereby ensuring the reliability of the mechanical fixation and conductive connection between the fuel cell stack 10 and the power transfer unit 20.

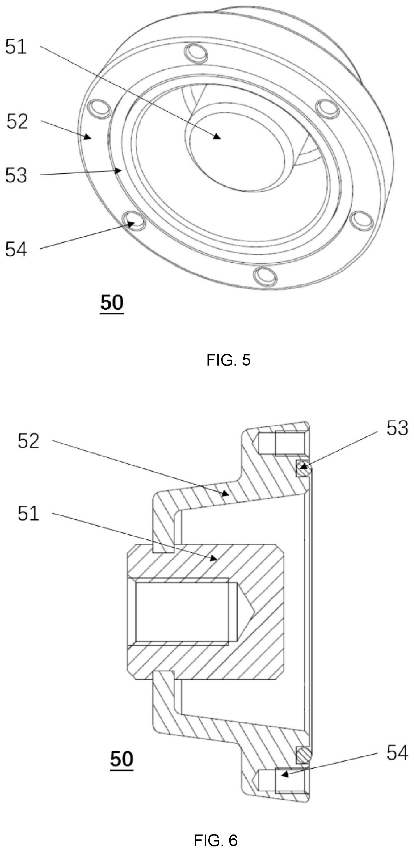

FIG. 5 shows, in a perspective view, an insulating post assembly 50 according to one embodiment of the present application and FIG. 6 shows, in a cross-sectional view, an insulating post assembly 50 according to one embodiment of the present application.

As can be clearly seen from FIGS. 5 and 6, the insulating post assembly 50 mainly comprises two parts, an insulating sleeve 52 that can be fixed in the facing surfaces of the fuel cell stack 10 and the power transfer unit 20 and a conductive post 51 fixed in the insulating sleeve 52. The insulating sleeve 52 may be made of an insulating material such as rubber, while the conductive post 51 may be made of a metallic material with good electrical conductivity, such as copper.

As can be clearly seen from FIG. 6, the insulating sleeve 52 has an inner surface constructed in a conical shape, and the conical inner surface of the insulating sleeve 52 corresponds to a conical plug-in section of the shielding element 43 of the connection assembly 40. As such, the shielding element 43 of the connection assembly 40 is capable of being inserted between the insulating sleeve 52 and the conductive post 51 of the insulating post assembly 50. Further, the conductive post 51 of the insulating post assembly 50 can be inserted into the conductive core 41 of the connection assembly 40.

To fix the insulating post assembly 50 in the fuel cell stack 10 and the power transfer unit 20, the insulating sleeve 52 is provided with a mounting flange at the end with a larger diameter, and mounting holes 54 are provided in the mounting flange in a circumferential manner. Screws, for example, can be screwed into the mounting holes 54. Six mounting holes 54 are exemplarily shown in the embodiment of FIG. 5. However, the number of mounting holes 54 is not limited to the six shown in the figure, but instead more or fewer mounting holes 54 may be provided. Of course, the insulating post assembly 50 may also be otherwise fixed in the fuel cell stack 10 and the power transfer unit 20, without limitation to the mounting holes 54 and screws shown in FIG. 5.

To achieve a seal, an annular groove may also be provided in the larger-diameter end face of the insulating sleeve 52, and a sealing ring 53 may be installed in the annular groove.

To fix the conductive post 51 in the insulating sleeve 52, a surrounding mounting groove can be provided around the conductive post 51 and a radially inwardly protruding flange provided at the smaller-diameter end of the insulating sleeve 52. The flange can be engaged in the mounting groove of the conductive post 51. However, this is merely exemplary. The conductive post 51 may also be fixed in the insulating sleeve 52 in any other known manner, without limitation to the embodiment shown in the figure.

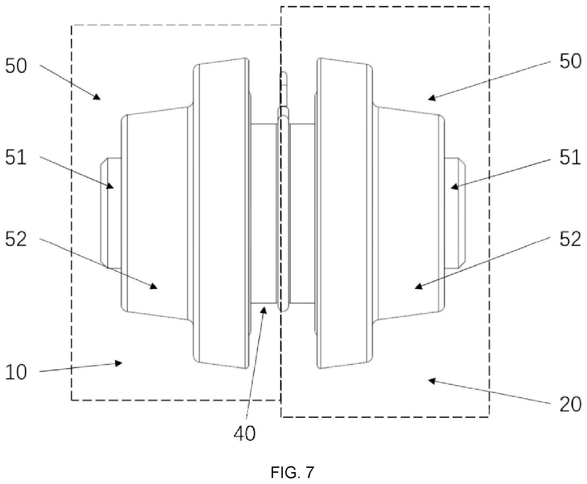

FIG. 7 shows, in a simplified schematic diagram, a portion of a power system according to one embodiment of the present application. Here, the fuel cell stack 10 and power transfer unit 20 of the power system are shown schematically using dashed boxes. An insulating post assembly 50 is mounted herein in the respective facing surfaces of the fuel cell stack 10 and the power transfer unit 20. The insulating post assembly 50 has an insulating sleeve 52 fixed in the facing surfaces of the fuel cell stack 10 and the power transfer unit 20 and a conductive post 51 fixed in the insulating sleeve 52. Here, the insulating post assembly 50 does not protrude from the facing surfaces of the fuel cell stack 10 and the power transfer unit 20, but is slightly recessed relative to the facing surfaces of the fuel cell stack 10 and the power transfer unit 20. However, it may also be contemplated that the insulating post assembly 50 is flush with the facing surfaces of the fuel cell stack 10 and the power transfer unit 20. It can be seen here that the two ends of the connection assembly 40 have been inserted into the corresponding insulating post assemblies 50 of the fuel cell stack 10 and the power transfer unit 20, respectively, thereby realizing mechanical fixation and conductive connection between the fuel cell stack 10 and the power transfer unit 20.

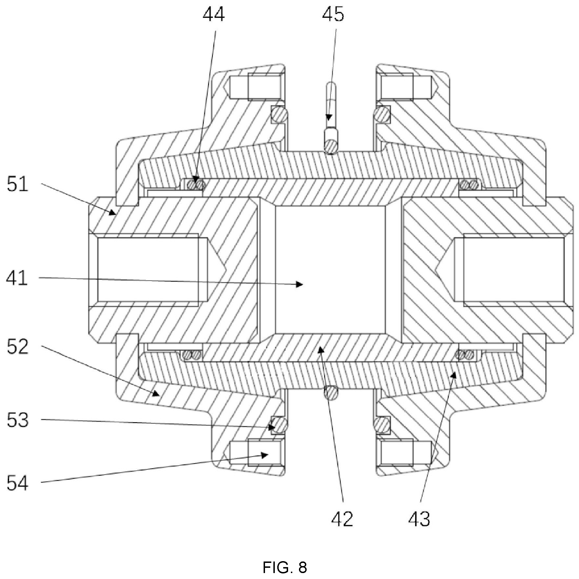

FIG. 8 shows, in a cross-sectional view, a portion of a power system according to one embodiment of the present application. The fuel cell stack 10 and the power transfer unit 20 are not depicted here. As can be seen more clearly from FIG. 8, the shielding element 43 of the connection assembly 40 is inserted between the insulating sleeve 52 and the conductive post 51 of the insulating post assembly 50, and the conductive post 51 of the insulating post assembly 50 is inserted into the conductive core 41 of the connection assembly 40. When the conductive post 51 of the insulating post assembly 50 is inserted into the conductive core 41 of the connection assembly 40, the claw-shaped portion of the contact section of the conductive core 41 is spread radially outward by the conductive post 51. However, the clamping element 44 is capable of applying a clamping force to the claw-shaped portion to counteract the spreading force, thereby creating sufficient contact force between the conductive core 41 and the conductive post 51. Further, the shielding element 43 can also apply radial force to the claw-shaped portion of the contact section between the clamping element 44 and the conductive core 41 to further prevent the claw-shaped portion of the contact section of the conductive core 41 from being spread excessively, thereby further ensuring the contact force between the conductive core 41 and the conductive post 51.

The power system can be used in an engine system, the engine system comprising a drive motor and the power system being used to drive the drive motor.

The foregoing are merely exemplary embodiments of the present application. The scope of protection of the present application is not limited to the above embodiments. Any technical solution under the concept of the present application falls within the scope of protection of the present application. It should be noted that certain improvements and modifications, without departing from the principles of the present application, should also be regarded as within the scope of protection of the present application for those of ordinary skill in the art.

## Claims

1. A connection assembly (40) for mechanically fixing and conductively connecting a fuel cell stack (10) and a power transfer unit (20),
wherein
the connection assembly (40) comprises:
a conductive core (41);
an insulating element (42) disposed around the conductive core (41); and
a shielding element (43) disposed around the insulating element (42),
wherein the two ends of the connection assembly (40) are capable of being inserted into corresponding insulating post assemblies (50) of the fuel cell stack (10) and the power transfer unit (20), respectively, to achieve mechanical fixation and conductive connection between the fuel cell stack (10) and the power transfer unit (20).

2. The connection assembly (40) according to Claim 1,
wherein
the conductive core (41) is constructed in a cylindrical shape and comprises a middle section and contact sections located at both ends of the middle section, wherein the middle section of the conductive core (41) has a first outer diameter, the contact sections of the conductive core (41) have a second outer diameter, the first outer diameter is smaller than the second outer diameter, and the portions of the contact sections extending axially beyond the insulating element (42) are constructed in a claw shape.

3. The connection assembly (40) according to Claim 2,
wherein
the claw-shaped portions of the contact sections are respectively provided with clamping elements (44) for applying a predetermined contact force to a conductive post (51) and the contact section when the conductive post (51) of the corresponding insulating post assembly (50) of the fuel cell stack (10) and the power transfer unit (20) is inserted into the contact section.

4. The connection assembly (40) according to Claim 3,
wherein
the clamping element (44) is disposed within an annular space defined by the conductive core (41), the insulating element (42), and the shielding element (43), such that the clamping element (44) is positioned axially by the insulating element (42) and the shielding element (43) and radially by the conductive core (41) and the shielding element (43).

5. The connection assembly (40) according to Claim 2,
wherein
the insulating element (42) comprises a middle section and end sections located at both ends of the middle section of the insulating element (42), the middle section of the insulating element (42) has a first inner diameter corresponding to a first outer diameter of the middle section of the conductive core (41), and the end sections of the insulating element (42) have a second inner diameter corresponding to a second outer diameter of the contact sections of the conductive core (41).

6. The connection assembly (40) according to Claim 1,
wherein
the free end of the shielding element (43) extending axially beyond the insulating element (42) has an inner diameter smaller than an outer diameter of the insulating element (42).

7. The connection assembly (40) according to Claim 1,
wherein
the shielding element (43) has a middle section and plug-in sections located at both ends of the middle section of the shielding element (43), the plug-in sections of the shielding element (43) being constructed in a conical shape with an outer diameter that gradually decreases toward a free end.

8. The connection assembly (40) according to Claim 7,
wherein
an outer surface of the middle section of the shielding element (43) is configured to be recessed relative to outer surfaces of the plug-in sections of the shielding element (43) and a grounding element (45) is provided on the recessed outer surface of the middle section of the shielding element (43).

9. The connection assembly (40) according to Claim 1,
wherein
the conductive core (41) is made of metal; and/or
the insulating element (42) is made of rubber; and/or
the shielding element (43) is made of rubber, and the outer surface of the shielding element (43) is provided with a layer of semiconductor material.

10. A power system comprising a fuel cell stack (10) and a power transfer unit (20),
wherein
the power system further comprises the connection assembly (40) according to any one of Claims 1 to 9, the connection assembly (40) mechanically fixing the fuel cell stack (10) to the power transfer unit (20) and conductively connecting them.

11. The power system according to Claim 10,
wherein
insulating post assemblies (50) are respectively mounted in the facing surfaces of the fuel cell stack (10) and the power transfer unit (20). Each insulating post assembly (50) has an insulating sleeve (52) fixed in the facing surfaces of the fuel cell stack (10) and the power transfer unit (20) and a conductive post (51) fixed in the insulating sleeve (52). **The** insulating sleeve (52) has an inner surface constructed in a conical shape, wherein the shielding element (43) of the connection assembly (40) is inserted between the insulating sleeve (52) and the conductive post (51) of the insulating post assembly (50) and the conductive post (51) of the insulating post assembly (50) is inserted into the conductive core (41) of the connection assembly (40).

12. An engine system comprising a drive motor, wherein
the engine system further comprises a power system according to Claim 10 or 11, the power system being used for driving the drive motor.
